Europäisches Patentamt

European Patent Office

Office européen des brevets

(19)

(11) Numéro de publication : **0 007 284**
**B1**

## (12) FASCICULE DE BREVET EUROPÉEN

(45) Date de publication du fascicule du brevet :
09.06.82

(51) Int. Cl.³ : **B 60 D 1/06**

(21) Numéro de dépôt : **79420030.3**

(22) Date de dépôt : **20.06.79**

(54) **Attelage de remorque pour véhicules, notamment automobiles.**

(30) Priorité : **20.06.78 FR 7818937**

(43) Date de publication de la demande :
**23.01.80 (Bulletin 80/02)**

(45) Mention de la délivrance du brevet :
**09.06.82 Bulletin 82/23**

(84) Etats contractants désignés :
**DE GB IT NL SE**

(56) Documents cités :
**DE A 2 406 983**
**DE C 947 675**
**DE C 954 029**
**FR A 1 440 862**
**FR A 2 163 169**
**FR A 2 359 000**
**US A 1 328 654**
**US A 1 422 189**
**US A 1 895 992**
**US A 2 062 788**
**US A 2 815 965**
**US A 3 503 627**
**US A 3 891 237**

(73) Titulaire : **Wasservogel, Francois**
**Treffort F-01370 Saint-Etienne-Du-Bois (FR)**

(72) Inventeur : **Wasservogel, Francois**
**Treffort F-01370 Saint-Etienne-Du-Bois (FR)**

(74) Mandataire : **Combe, André et al**
**Cabinet BEAU DE LOMENIE 99, Grande rue de la**
**Guillotière**
**F-69007 Lyon (FR)**

Imprimerie Jouve, 18, rue St-Denis, 75001 Paris, France

Attelage de remorque pour véhicules, notamment automobiles

## Domaine technique

La présente invention est relative aux attelages permettant d'assurer la liaison entre un véhicule et une remorque et elle concerne plus particulièrement les attelages utilisés pour permettre la liaison entre un véhicule automobile et une remorque.

## Technique antérieure

On connaît déjà des attelages permettant la liaison entre un véhicule et une remorque et ces attelages comportent généralement un dispositif d'assemblage porté par une structure de fixation permettant une adaptation au châssis, au cadre, au bâti, ou à toute autre partie arrière d'un véhicule tracteur. Le dispositif d'assemblage est le plus souvent constitué par une articulation du type universel, telle qu'une rotule, qui est placée à demeure en saillie par rapport à la partie postérieure extrême du véhicule, de manière à permettre le montage et le démontage de l'organe complémentaire qui est porté par le timon de la remorque. En général, un verrou est prévu, soit sur le dispositif, soit sur l'organe complémentaire du timon pour assurer un assemblage de sécurité, notamment résistant aux efforts de traction développée lors du roulement.

Les attelages du type ci-dessus ne donnent pas satisfaction pour au moins deux raisons.

La première est que le dispositif d'assemblage tel que la rotule fait toujours saillie hors de la partie postérieure la plus extrême du véhicule, de sorte qu'il représente une proéminence dangereuse pour les autres véhicules en général, notamment lors des manœuvres de stationnement, ainsi d'ailleurs que pour les piétons amenés à contourner un tel véhicule.

La seconde est que le dispositif d'assemblage est ainsi totalement exposé aux coups et qu'il devient donc nécessaire de protéger en permanence la rotule de manière à éviter toutes détériorations qui seraient préjudiciables à sa bonne coopération avec l'organe d'assemblage complémentaire du timon.

En plus des inconvénients ci-dessus, il faut également mentionner qu'un tel attelage détruit notablement l'esthétique de la carrosserie, notamment d'un véhicule automobile.

Pour tenter de résoudre ces problèmes, on a proposé une solution consistant à rendre amovible le dispositif d'assemblage proprement dit, à savoir la rotule. Dans ce but, il a été préconisé, notamment par la DE-A-2 406 983, de faire porter à l'arrière d'un véhicule tracteur une pièce femelle à section polygonale chargée de recevoir une pièce mâle complémentaire, porteuse d'une rotule. Des butées axiales sont prévues entre les deux pièces qui peuvent être immobilisées relativement par au moins un verrou à rappel élastique commandé manuellement à l'ouverture. Une telle solution vise à offrir à l'utilisateur la possibilité d'enlever la rotule et la pièce mâle en dehors des périodes d'utilisation de l'attelage.

Cette solution n'apporte pas de remède aux problèmes posés car, après enlèvement de la rotule, la pièce femelle subsiste toujours, au moins en partie, en saillie par rapport au bord extrême arrière du véhicule tracteur.

En outre, cette solution crée une obligation d'enlèvement et de mise en place et revêt, par conséquent, un caractère contraignant pour l'utilisateur. En pratique, un tel attelage, bien évidemment plus onéreux d'achat et d'entretien, est laissé en permanence dans son état d'utilisation et s'assimile donc aux solutions traditionnelles connues.

On a proposé aussi de placer sur le véhicule tracteur une pièce creuse destinée à recevoir un prolongement d'une articulation à rotule portée par le timon d'un véhicule tracté. De tels dispositifs font intervenir aussi un verrou automatique associé à la pièce creuse pour immobiliser le prolongement.

Tel est le cas, notamment, de la réalisation selon le brevet DE-C-954 029 selon laquelle la pièce creuse est polygonale en section et reçoit un prolongement complémentaire relié en permanence par une articulation au timon du véhicule tracté.

Ces dispositifs ne permettent pas de répondre au problème posé qui est de supprimer toute partie d'attelage saillant hors du véhicule tracteur. En effet, compte tenu de la nécessité de manœuvrer le verrou pour la désolidarisation, la pièce creuse doit être accessible et pour cela est obligatoirement située, au moins en partie, à l'extérieur du véhicule tracteur.

Par ailleurs, les dispositifs ci-dessus connus n'assument qu'une fonction de liaison et d'attelage, de sorte qu'il est nécessaire de monter, sur l'arrière du véhicule tracteur, une prise de raccordement électrique pour l'alimentation des servitudes du véhicule tracté. Cette prise doit être aussi accessible et se trouve toujours, sinon en saillie, du moins apparente, et exposée à un risque non négligeable de détérioration par coups ou chocs.

## Exposé de l'invention

La présente invention a pour objet de remédier aux inconvénients ci-dessus et elle se propose de fournir un nouvel attelage présentant l'avantage, en dehors des périodes de liaison avec une remorque, d'être complètement dissimulé et de ne comporter aucun organe faisant saillie extérieurement aux parties postérieures les plus extrêmes du véhicule tracteur.

L'objet de l'invention est en outre conçu pour assumer simultanément une fonction supplémentaire de connexion automatique des circuits électriques qui sont éventuellement prévus sur la remorque tractée, de manière à assurer ainsi l'alimentation simultanée d'éléments, appareils ou organes électriques devant, par exemple, fonctionner simultanément à des organes homologues portés par le véhicule tracteur.

Conformément à l'invention, l'attelage de remorque, notamment pour véhicules automobiles, est caractérisé en ce que :

— l'articulation est à rotule,

— et le verrou comprend, d'une part, deux tourillons ou doigts portés extérieurement par la pièce creuse et, d'autre part, une pince élastique adaptée sur le segment pour enserrer lesdits tourillons.

Diverses autres caractéristiques ressortent de la description ci-dessous faite en référence aux dessins annexés qui montrent, à titre d'exemple non limitatif, une forme de réalisation de l'objet de l'invention.

Brève description des dessins

La figure 1 est une élévation schématique illustrant la mise en œuvre de l'objet de l'invention entre un véhicule tracteur du type automobile et une remorque dite bagagère.

La figure 2 est une coupe longitudinale montrant, à plus grande échelle, l'objet de l'invention.

La figure 3 est une coupe élévation illustrant plus en détail certains des éléments constitutifs de l'objet de l'invention.

La figure 4 est une vue en plan partielle partie en coupe prise selon la ligne IV-IV de la fig. 3.

Meilleure manière de réaliser l'invention

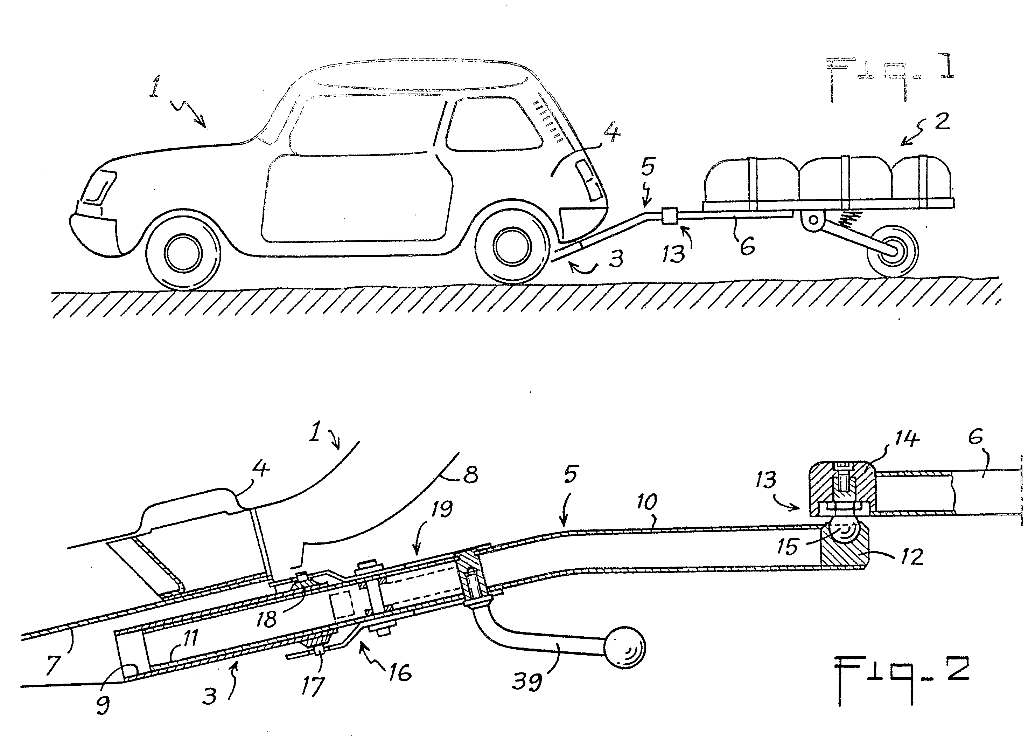

La figure 1 montre un exemple d'utilisation de l'attelage conforme à l'invention entre un véhicule automobile 1 de type tourisme et une remorque 2 de conception bagagère, mais il est bien évident que des utilisations différentes peuvent être envisagées et que l'attelage conforme à l'invention peut être prévu pour assurer la liaison entre un véhicule tracteur de type utilitaire et une remorque porteuse de plus grosse capacité possédant ou un plusieurs essieux.

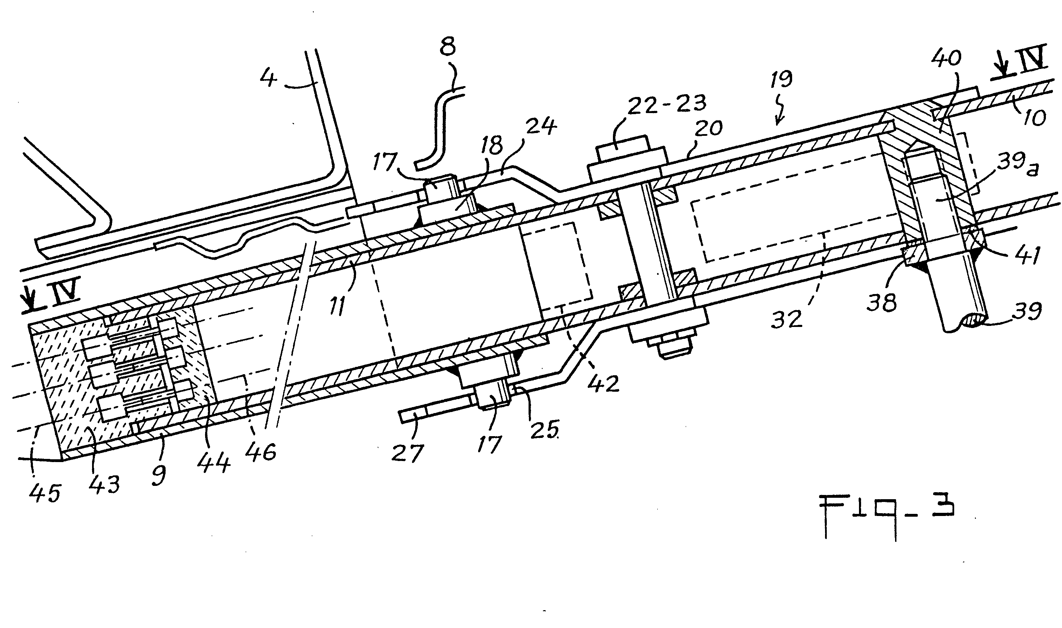

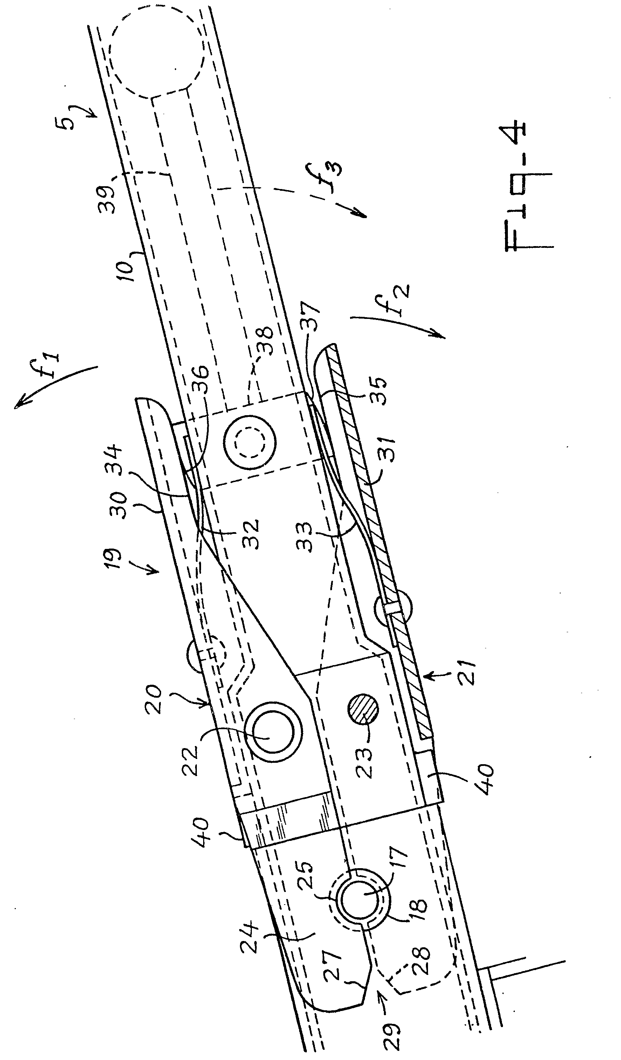

Selon les figures 2 et 4, l'attelage conforme à l'invention comprend une première partie 3 destinée à être fixée à la coque, la caisse, le cadre, le châssis, le bâti ou toute autre structure 4 du véhicule 1 et une seconde partie 5 destinée à être reliée au timon 6 de la remorque 2.

La partie 3 comprend un support 7 conformé et conçu pour permettre son adaptation sur la structure 4, de préférence par des moyens démontables, qui ne sont pas représentés aux dessins, étant donné qu'ils sont choisis en fonction des caractéristiques spécifiques de la structure 4, c'est-à-dire selon le type de véhicule à équiper et qu'ils font partie du domaine de l'homme de l'art en la matière. Le support 7 est dans tous les cas conçu pour être adapté à l'arrière d'un véhicule et notablement en retrait de la partie postérieure la plus extrême de manière à être, de gaçon générale, dissimulé en retrait de cette partie extrême postérieure, en l'occurrence du pare-choc 8. Le support 7 maintient un fourreau tubulaire 9 qui est, de préférence, à section polygonale et notamment rectangulaire. Le fourreau 9 peut être fixé sur le support 7 de façon amovible ou non mais, dans tous les cas, cette liaison est prévue pour que ledit fourreau soit au plus aligné avec la partie extrême 8 ou, de préférence, comme illustré aux dessins, disposé en retrait de cette dernière.

La seconde partie 5 de l'attelage est constituée par un demi-timon tubulaire 10 dont la section extérieure est choisie au moins localement complémentaire à la section intérieure du fourreau 9, c'est-à-dire que, dans le cas présent, le demi-timon 10 présente des dimensions extérieures telles qu'il peut être engagé, par un segment antérieur 11 qu'il forme, à coulissement doux à l'intérieur du fourreau 9. Dans certains cas, la complémentarité peut être limitée au segment d'introduction 11 et il peut être prévu de conférer au demi-timon 10 une section différente en dehors du segment 11. Le demi-timon 10 comporte à l'opposé du segment d'introduction 11 une partie 12 d'une articulation 13 par laquelle il est relié au timon 6 de la remorque 2, lequel est pourvu de la partie complémentaire 14 formant avec la partie 12 l'articulation 13. Cette articulation 13 peut être du type à deux degrés de liberté et, de préférence, cette articulation est constituée par une liaison universelle telle que, par exemple, une rotule 15. Selon la forme de réalisation illustrée aux dessins, la rotule 15 est portée par le timon 6 alors que le logement complémentaire est présenté par la partie 12 solidaire du demi-timon 10. Il est évident qu'il est également possible d'inverser une telle disposition selon les caractéristiques de montage, d'adaptation ou, éventuellement, de garde au sol présentée par le véhicule et/ou la remorque.

L'attelage selon l'invention comprend, par ailleurs, une troisième partie constituée par un système d'assemblage rapide désigné dans son ensemble par la référence 16 et destiné à permettre la liaison entre les parties 3 et 5. Le système 16 comprend deux ergots 17 en forme de tourillons cylindriques qui sont rapportés ou formés coaxialement par le fourreau 9, de manière à faire saillie à partir de la surface extérieure de ce dernier. Dans l'exemple de réalisation illustré, les ergots 17 sont formés selon un même axe perpendiculaire à l'axe longitudinal du fourreau, de manière à être situés dans le plan vertical passant par l'axe longitudinal du véhicule. Les ergots 17 peuvent être formés ou rapportés de toute façon convenable et notamment être associés à des embases de renforcement 18, par exemple soudées.

Le système 16 comprend, par ailleurs, sur le demi-timon 10 et sensiblement en retrait du segment d'introduction 11 de ce dernier, une pince élastique 19 comprenant, tel que cela ressort plus précisément des fig. 3 et 4, deux branches 20 et 21 identiques montées en opposition l'une par rapport à l'autre en étant articulées sur le demi-timon 10. Dans l'exemple illustré, chaque branche 20 est articulée par un axe 22 ou 23 sur le demi-timon 10, mais il est évident que les deux branches 20 et 21 pourraient éventuellement être articulées sur un axe commun. Les axes d'articulation 22-23 sont situés sur le demi-timon 10 de manière à être placés parallèlement au plan passant par l'axe longitudinal du véhicule et de l'attelage. Chaque branche 20 ou 21 est réalisée pour présenter une section en U comprenant deux ailes parallèles 24 s'étendant à partir d'une âme commune. Les branches sont montées articulées de manière à emboîter le segment 11 et à se faire face par les bords longitudinaux des ailes 24. Les bords face à face des ailes 24 délimitent, dans leurs parties dirigées vers le segment d'introduction 11 par rapport aux axes d'articulation 22, 23, des logements semi-circulaires 25 d'un rayon au moins égal et, de préférence, légèrement supérieur à celui des ergots 17. Par ailleurs, les parties terminales antérieures des ailes 24 dirigées vers le segment d'introduction 11 possèdent des pans coupés 27 et 28 pratiqués à partir des bords se faisant mutuellement face, de manière que, dans la position représentée à la fig. 4, ils définissent ensemble, pour chaque paire d'ailes alignées correspondant à l'un des côtés du segment d'introduction 11, un couloir d'engagement 29 à bords convergents.

Les branches 20 et 21 comportent, à l'opposé du segment 11 par rapport aux axes d'articulation 22 et 23, des prolongements 30 et 31 qui s'étendent parallèlement aux côtés du demi-timon 10. Les prolongements 30 et 31 supportent des organes élastiques 32 et 33 qui prennent appui sur le demi-timon 10 de manière à solliciter toujours les branches 20 et 21 en pivotement relatif dans le sens des flèches $f_1$ et $f_2$, c'est-à-dire dans le sens pour lequel les ailes 24 sont sollicitées en fermeture sur le segment d'introduction 11. Les prolongements 30 et 31 présentent, sur leurs faces intérieures, des bords parallèles 34 et 35 destinés à coopérer avec des rampes 36 et 37 formées par une came 38 qui est fixée en bout d'une poignée d'entraînement en rotation 39 portée par le demi-timon 10. Dans l'exemple représenté, la poignée 39 comporte une partie terminale filetée 39$a$ qui est montée dans un taraudage borgne présenté par une entretoise 40 fixée dans le demi-timon 10. La partie terminale filetée 39$a$ est de préférence associée à une rondelle de serrage 41 ou à tout autre moyen technique équivalent susceptible de s'opposer au desserrage libre de la poignée 39 à partir d'une position stable correspondant à un alignement de ladite poignée avec l'axe longitudinal du demi-timon 10. Selon une disposition caractéristique, dans cette position, la came 38 est alors disposée de manière que les rampes 36 et 37 coopèrent, par les sommets plans qu'elles forment, avec les bords rectilignes 34 et 35 des branches 20 de la pince 19.

L'attelage décrit ci-dessus fonctionne de la façon suivante :

Selon les figures 2, 3 et 4, on remarque que le segment d'introduction 11 est engagé à l'intérieur du fourreau 9 jusqu'à une position d'introduction maximale qui est déterminée par deux butées 42 rapportées sur le segment 11 pour coopérer avec les bords de la section d'introduction du fourreau 9. Dans cette position, les organes élastiques 32 et 33 sollicitent les branches 20 et 21 en position de fermeture, de manière que les ailes 24 enserrent la partie terminale d'introduction du fourreau 9 et entourent les deux ergots ou doigts 17. Les branches 20 et 21 sont maintenues dans cette position par l'action de blocage et d'immobilisation assumée par la came 38 qui est maintenue par l'intermédiaire de la poignée 39 dans la position pour laquelle les sommets plans des rampes 36 et 37 coopèrent avec les bords rectilignes 34 et 35 des branches 20 et 21.

Dans cette position, l'attelage conforme à l'invention assume la liaison entre le véhicule 1 et la remorque 2 qui peut toutefois connaître des déplacements latéraux centrés sur l'articulation universelle 13.

Lorsqu'il est souhaité dételer la remorque 2 par rapport au véhicule tracteur 1, il suffit de faire tourner la poignée 39 dans le sens de la flèche $f_3$ de façon à faire pivoter la came 38 et provoquer l'effacement des rampes 36 et 37 par rapport aux bords rectilignes 34 et 35 des branches 20 et 21. La libération des branches 20 et 21 intervient après une course de 90° environ appliquée à la poignée 39. L'utilisateur peut ensuite agir manuellement sur les branches 20 et 21 de manière à les rapprocher contre l'action des organes élastiques 32 et 33, en les faisant pivoter sur les axes 22 et 23 dans les sens contraires à ceux des flèches $f_1$ et $f_2$. Cette action a pour effet d'ouvrir les ailes 24 et, par conséquent, de dégager les ergots 17 pour permettre le glissement et le recul du segment d'introduction 11 par rapport au fourreau 9. Il devient ainsi possible de dégager le demi-timon 10 et de l'extraire de la partie 3 de l'attelage qui reste fixée à demeure sur le véhicule. Le demi-timon 10 peut alors être soumis à un pivotement autour de l'axe de l'articulation 13, de manière à être ramené parallèlement au timon 6 sur lequel il peut être maintenu et immobilisé par tout moyen convenable.

Dans cet état, le véhicule ne comporte plus que la partie 3 qui est totalement dissimulée par rapport à la partie extrême postérieure 8, de sorte que le véhicule présente alors tout-à-fait l'aspect et l'apparence d'un véhicule traditionnel non équipé d'un attelage de remorque.

Lorsqu'il est souhaité atteler la remorque 2 au véhicule 1 et, par conséquent, rétablir la constitution unitaire de l'attelage conforme à l'invention par l'assemblage des parties 3 et 5 au moyen du système 16, l'utilisateur amène le demi-timon 10 dans l'alignement du timon 6 à l'opposé de l'articulation 13, de façon à rendre possible l'engagement du segment d'introduction 11 à l'intérieur du fourreau 9. Cette action ne fait intervenir qu'un glissement relatif axial qui est prolongé jusqu'au moment où les ergots 17 sont amenés dans les couloirs d'introduction 29 des ailes 24 des branches fermées de la pince 19. En poursuivant l'action d'introduction, la pression exercée par les ergots 17 contre les pans coupés 27 et 28 provoque l'ouverture des branches 20 et 21 contre l'action des organes élastiques 32 et 33. Les ailes 24 s'ouvrent, alors, pour permettre le passage relatif des ergots 17 qui sont ainsi amenés à pénétrer relativement jusque dans les logements 25 dans lesquels ils sont emprisonnés par la fermeture automatique des ailes 24 sous l'action des ressorts 32 et 33 agissant sur les branches 20 et 21. Dans cette position, il suffit alors à l'utilisateur de ramener la poignée de verrouillage 39 dans le sens contraire à celui de la flèche $f_3$ pour lui faire occuper la position illustrée à la fig. 4 dans laquelle les sommets plans des rampes 36 et 37 coopèrent directement avec les bords 34 et 35 des branches 20 et 21 qui sont ainsi maintenues contre tout déplacement relatif intempestif dans leur position de fermeture sur le fourreau 9 et sur les ergots 17.

La position de fermeture est obtenue automatiquement avec sécurité, car l'engagement maximal relatif des ergots 17 à l'intérieur des couloirs à bords convergents 29 et jusque dans les logements 25 est déterminée par l'amenée en contact des butées 42 avec les bords de la section d'entrée du fourreau 9.

Outre les avantages de dissimulation totale de la partie de l'attelage fixé à demeure sur le véhicule tracteur, il y a lieu de remarquer que la conception de l'objet de l'invention permet de conférer à cette partie d'organe une grande protection contre les coups susceptibles d'entraîner sa détérioration et son défaut de complémentarité avec la pièce portée par le demi-timon 10.

La conception de l'objet de l'invention présente, par ailleurs, un avantage très important, car, ainsi que cela apparaît à la fig. 3, il devient également possible de faire jouer aux pièces complémentaires des parties 3 et 5 et, plus particulièrement, au fourreau 9 et au segment d'introduction 11, une fonction de connexion pour des circuits électriques prévus sur le véhicule tracteur et sur la remorque. Cela est notamment le cas pour les remorques automobiles qui, selon la réglementation en vigueur, doivent être équipées de feux de signalisation correspondant à ceux du véhicule qui peuvent être masqués par la présence de la remorque. Selon l'invention, il est avantageusement prévu de placer dans le fond du fourreau 9, par exemple la partie femelle 43 d'un connecteur électrique dont la partie mâle 44 est portée par le segment d'introduction 11. Les parties 43 et 44 sont reliées électriquement à des conducteurs 45 et 46 menant aux fonctions électriques devant être assumées lorsque la remorque est attelée. La connexion intervient ainsi automatiquement après mise en place du demi-timon 10 dans la position de complémentarité des parties 3 et 5 par l'intermédiaire du système 16 et l'utilisateur n'a plus à assumer la tâche supplémentaire de raccordement des réseaux électriques, comme cela se pratique actuellement.

Outre l'avantage de raccordement automatique, il y a lieu de noter que la disposition des demi-connecteurs 43 et 44 dans le fourreau 9 et en bout du segment d'introduction 11 permet de protéger efficacement ces demi-connecteurs contre tout risque de détérioration ou d'introduction de produits ou matières susceptibles d'affecter le bon raccordement ultérieur.

Un autre avantage de cette disposition réside dans le fait que la conformation polygonale du segment d'introduction 11 et du fourreau 9, laquelle permet de disposer d'une pré-orientation de l'axe des ergots 17 sans possibilité de rotation intempestive sur l'axe longitudinal du segment 11, assure automatiquement une coopération convenable des demi-connecteurs électriques sans aucun risque de raccordement défectueux ou erroné et sans qu'il soit nécessaire de prévoir des demi-connecteurs possédant des organes d'assemblage selon une orientation préférentielle.

Le dessin montre que le demi-timon 10 est cintré ou légèrement coudé dans sa partie médiane, mais il est certain qu'une telle disposition dépend de la garde au sol relative du véhicule tracteur et de la remorque et que toute autre disposition peut donc être envisagée pour respecter un tel impératif.

Possibilité d'application industrielle

L'objet de l'invention peut être mis en œuvre pour les remorques devant être attelées à des véhicules automobiles de tourisme ou aussi à certains véhicules automobiles à fonction utilitaire.

**Revendications**

1. Attelage de remorque, notamment pour véhicules automobiles du type comprenant une pièce creuse (3), de section interne polygonale, formant fourreau, portée par le véhicule tracteur et située, par son bord extrême arrière, en deçà de la partie externe arrière du véhicule tracteur, un prolongement (5) relié au véhicule tracté par une articulation (13) et formant un segment d'introduction (11) polygonal complémentaire à la pièce creuse dans laquelle il peut être introduit et un verrou élastique à course de fermeture automatique immobilisant le prolongement dans la pièce creuse, caractérisé en ce que l'articulation est à rotule, et le verrou (16) comprend, d'une part, deux tourillons ou doigts (17) portés extérieurement par la pièce creuse (3) et, d'autres part, une pince élastique (19) adaptée sur le segment (11) pour enserrer lesdits tourillons.

2. Attelage de remorque selon la revendication 1, caractérisé en ce que la pince (19) est formée par deux mâchoires (20-21), articulées sur le segment d'introduction (11), associées à des organes de rappel élastique (32-33) et coopérant, par leurs branches (30-31), avec les rampes opposées (36-37) d'une came de verrouillage tournante (38) montée en bout d'une poignée (39) portée par le prolongement (5).

3. Attelage de remorque selon la revendication 1, caractérisé en ce que les deux tourillons ou doigts (17) s'étendent vers l'extérieur, à l'opposé l'un de l'autre, selon un même axe contenu dans le plan vertical passant par l'axe longitudinal du véhicule tracteur.

4. Attelage de remorque selon la revendication 1, caractérisé en ce que le segment d'introduction (11) comporte des butées (42) limitant l'engagement dans le fourreau.

5. Attelage de remorque selon la revendication 1, caractérisé en ce que le fourreau et le segment portent des connecteurs électriques internes complémentaires (43-44) raccordés respectivement aux réseaux (45-46) des véhicules tracteur et tracté.

## Claims

1. Trailer attachment, in particular for motor vehicles of the type comprising a hollow piece (3) of polygonal internal cross-section, forming a sleeve carried by the trailing vehicle, and situated by its rear end edge beyond the rear external part of the trailed vehicle, an extension (5) connected to the trailed vehicle by an articulation (13) and forming a polygonal fitting segment (11) complementary to the hollow piece in which it can be introduced, and an elastic locking member with automatic locking stroke immobilizing the extension in the hollow piece, characterized in that the articulation is of the swivel type and the locking member (16) comprises link pins or fingers (17) carried externally by the hollow piece (3) and an elastic clamp (19) adapted to the segment (11) for clamping the said link pins.

2. Trailer attachment according to claim 1, characterized in that the clamp (19) is constituted by two jaws (20-21) coupled to the fitting segment (11), associated to elastic return members (32-33) and cooperating by their branches (30-31) with the opposed ramps (36-37) of a rotating locking cam (38) mounted at the end of a handle (39) carried by the extension (5).

3. Trailer attachment according to claim 1, characterized in that the two link pins or fingers (17) extend outwardly, one opposite the other, along the same axis contained in the vertical plan traversing the longitudinal axis of the trailing vehicle.

4. Trailer attachment according to claim 1, characterized in that the fitting segment (11) comprises stops (42) limiting the engagement into the sleeve.

5. Trailer attachment according to claim 1, characterized in that the sleeve and the segment carry complementary internal electric connectors (43-44) respectively connected to the networks (45-46) of the trailed and trailing vehicles.

## Ansprüche

1. Anhängerkupplung, insbesondere für Kraftfahrzeuge, mit einem einen vieleckigen Innenquerschnitt aufweisenden hohlen Teil (3), das eine vom Zugfahrzeug getragene Hülse bildet und mit seinem äußersten hinteren Rand diesseits des äußeren Hinterteils des Zugfahrzeugs angeordnet ist, mit einer Verlängerung (5), die über ein Gelenk (13) mit dem gezogenen Fahrzeug verbunden ist und einen vieleckigen Einführungsabschnitt (11) bildet, der zum hohlen Teil komplementär ist, in den er eingeführt werden kann, und mit einer einen automatischen Schließhub aufweisenden elastischen Verriegelung, die die Verlängerung im hohlen Teil festlegt, dadurch gekennzeichnet, daß das Gelenk ein Kugelgelenk ist und daß die Verriegelung (16) zwei vom hohlen Teil (3) außen getragene Zapfen oder Finger (17) und eine an den Abschnitt (11) angepaßte elastische Klemme (19) zum Einspannen der Zapfen aufweist.

2. Anhängerkupplung nach Anspruch 1, dadurch gekennzeichnet, daß die Klemme (19) durch zwei am Einführungsabschnitt (11) angelenkte Backen (20, 21) gebildet ist, die mit elastischen Rückstellorganen (32, 33) verbunden sind und mit ihren Schenkeln (30, 31) mit den gegenüberliegenden Rampen (36, 37) eines drehbaren Verriegelungsnockens (38) zusammenarbeiten, der am Ende eines von der Verlängerung (5) getragenen Handgriffs (39) befestigt ist.

3. Anhängerkupplung nach Anspruch 1, dadurch gekennzeichnet, daß die beiden Zapfen oder Finger (17) sich entgegengesetzt zueinander Längs der selben Achse nach außen erstrecken, die in der durch die Längsachse des Zugfahrzeugs verlaufenden senkrechten Ebene enthalten ist.

4. Anhängerkupplung nach Anspruch 1, dadurch gekennzeichnet, daß der Einführungsabschnitt (11) den Eingriff in die Hülse begrenzende Anschläge (42) aufweist.

5. Anhängerkupplung nach Anspruch 1, dadurch gekennzeichnet, daß die Hülse und das Segment innere komplementäre elektrische Anschlüsse (43, 44) aufweisen, die an die Netze (45, 46) des Zugfahrzeugs bzw. des ziehenden Fahrzeugs angeschlossen sind.

Fig.1

Fig.2

0 007 284

Fig-3

Fig-4

0 007 284